# EUROPEAN PATENT SPECIFICATION

(11) **EP 4 098 974 B1**
(45) Date of publication and mention of the grant of the patent: **07.10.2026**
(21) Application number: 20921045.9
(22) Date of filing: 28.02.2020
(51) Int. Cl.: G01S 19/45, G01S 19/14, G01S 19/25, G01C 21/30

(54) **METHODS AND DEVICES FOR TRANSMITTING SATELLITE-RELATED INFORMATION BETWEEN VEHICLES**
VERFAHREN UND VORRICHTUNGEN ZUR ÜBERTRAGUNG SATELLITENBEZOGENER INFORMATIONEN ZWISCHEN FAHRZEUGEN
MÉTHODES ET DISPOSITIFS POUR LA TRANSMISSION D'INFORMATIONS SATELLITAIRES ENTRE VÉHICULES

(43) Date of publication of application: 07.12.2022
(73) Proprietor: Yinwang Intelligent Technologies Co., Ltd., Shenzhen, Guangdong 518129 (CN)
(72) Inventor: WAN, Lei, Shenzhen, Guangdong 518129 (CN); WU, Yong, Shenzhen, Guangdong 518129 (CN); LIU, Jianqin, Shenzhen, Guangdong 518129 (CN); LI, Mingchao, Shenzhen, Guangdong 518129 (CN)
(74) Representative: Pfenning, Meinig & Partner mbB
(86) International application number: PCT/CN2020/077195
(87) International publication number: WO 2021/168795

(56) References cited:
- EP-A1- 3 109 669
- CN-A- 110 381 526
- CN-A- 110 536 234
- CN-A- 110 632 626
- DE-A1- 102011 051 100
- DE-A1- 102014 216 276
- US-A1- 2002 098 849
- US-A1- 2007 063 893
- US-A1- 2008 119 212
- US-A1- 2008 188 236
- US-A1- 2009 079 622
- US-A1- 2011 178 708
- US-A1- 2019 294 898

## Description

### TECHNICAL FIELD

This application relates to the field of navigation technologies, and in particular, to navigation methods, an apparatus, a computer readable storage medium and a computer program product.

### BACKGROUND

A self-driving car (Autonomous vehicles, Self-piloting automobile), also referred to as a driverless car, a computer driving car, or a wheeled mobile robot, is a smart car that realizes unmanned driving through a computer system. The self-driving car relies on collaboration of artificial intelligence, visual computing, radar, a positioning system, and a map system to enable a computer to automatically and safely operate a motor vehicle without any active operation from a human being.

The positioning system is mainly implemented by using the global positioning system (Global Positioning System, GPS) and inertial navigation. With rapid development of the automobile industry in China and an increase in a quantity of car owners, application of the GPS is a general market trend. The positioning system is an assembly or an apparatus (or a part) including interrelated components that have a target of determining a spatial position. The system can ensure that at least four satellites can be simultaneously observed at any point on the earth at any time, to ensure that the satellites can collect a longitude, a latitude, and an altitude of the observation point, to implement functions such as navigation, positioning, and timing. This technology can be used to guide an aircraft, a ship, a vehicle, or an individual to safely and accurately follow a selected route, to reach a destination on time.

The self-driving car uses a GPS positioning method for positioning. A basic principle of the GPS navigation system is as follows: A distance between a satellite whose position is known and a user receiver is measured, and then a specific position of the receiver is known based on data of a plurality of satellites. When the car is outdoors, a GPS signal is good, and satellite searching is quite fast, thereby meeting a self-driving requirement. However, when the car starts navigation in an underground garage, satellite searching is quite slow when the car drives to the ground. This is because in a place where there is no GPS signal, the system keeps searching for a satellite and deletes satellite information used for last positioning. After the car leaves the garage, the system re-searches for a signal. Therefore, satellite searching is slow. As a result, the navigation system cannot meet a requirement for high timeliness in a self-driving scenario.

DE 102014216276 describes a method for determining the position of a motor vehicle.

DE 102011051100 describes a method for providing correction signals for terminal of satellite supported position determining system, which involves determining position of mobile reference device for unit of position determining system in form of position data.

US 2011/178708 describes performing initialization of an inertial navigation system using information obtained from an image of an object.

US 2019/294898 describes a system having an encoded data set and a sensor. The encoded data set may be configured to store a plurality of information relating to a surrounding area.

EP 3109669 describes a navigation method that includes: obtaining first information, where the first information includes reference position information of the first device and/or satellite-related information, and determining a position of the first device based on the first information; and navigating the first device based on the position of the first device.

### SUMMARY

Embodiments of this application provide a navigation methods, an apparatus, a computer readable storage medium and a computer program product, to enable a device to quickly perform positioning and satellite searching, further to quickly restore navigation. The scope of protection of the present invention is set out by the appended claims.

According to a first aspect, a navigation method is provided, performed by a second device. The method includes:
receiving second information sent by a roadside unit, wherein the second information is used to prompt the second device to send first information to a first device;
sending first information to the first device, where the first information includes satellite-related information, so that the first device determines a position of the first device based on the first information, and further navigates the first device.

The satellite-related information comprises at least one of a quantity of found satellites, an angle of each satellite, a frequency of each satellite, positioning time information, and satellite ephemeris information. Each of the first device and the second device is a vehicle terminal.

In an optional example, the first information additionally comprises reference position information of the first device.

In an optional example, before the sending first information to a first device, the method further includes:
receiving request information sent by the first device, where the request information includes a content indication of the first information.

In an optional example, the reference position information of the first device comprises at least one of a longitude coordinate, a latitude coordinate, an altitude coordinate, a pseudo-range observation value, and a carrier phase observation value

In an optional example, the another device is another vehicle terminal outside a garage exit.

In an optional example, the reference position information of the first device includes a plurality of reference positions and identifiers of the plurality of reference positions.

In an optional example, the method further comprises:
when detecting, by the roadside unit, the first device, sending, by the roadside unit, the second information to the second device.

In an optional example, the detecting a first device (201) comprises detecting the first device when it leaves an exit of a garage, a tunnel or under a bridge.

According to a second aspect, a combination of a vehicle terminal and a roadside unit is provided according to claim 7.

According to a third aspect, a computer readable storage medium is provided. The computer storage medium comprises a program, wherein when the program is executed by a processor, the method according to the first aspect.

According to a fourth aspect, a computer program product is provided. The computer program product includes an instruction, where when the computer program product is run on a computer, the computer is enabled to perform the steps in the method according to the first aspect.

### BRIEF DESCRIPTION OF DRAWINGS

To describe the technical solutions in the embodiments of this application or the prior art more clearly, the following briefly describes the accompanying drawings for describing the embodiments.
FIG. 1 is a schematic diagram of a GPS navigation system according to an embodiment of this application;
FIG. 2A is a schematic flowchart of a navigation method according to an embodiment of this application; FIG. 2B is a schematic diagram of obtaining reference position information from a roadside unit in a single-exit scenario according to an embodiment of this application;
FIG. 2C is a schematic diagram of obtaining a carrier phase observation value according to an embodiment of this application;
FIG. 2D is a schematic diagram of obtaining reference position information from a roadside unit in a multi-exit case according to an embodiment of this application;
FIG. 2E is a schematic diagram of obtaining reference position information in another multi-exit case according to an embodiment of this application;
FIG. 2F is a schematic diagram of obtaining reference position information from another device according to an embodiment of this application;
FIG. 2G is another schematic diagram of obtaining reference position information from another device according to an embodiment of this application;
FIG. 3 is a schematic flowchart of another navigation method according to an embodiment of this application;
FIG. 4 is a schematic flowchart of another navigation method according to an embodiment of this application;
FIG. 5 is a schematic flowchart of another navigation method according to an embodiment of this application;
FIG. 6 is a structural block diagram of a communications apparatus according to an embodiment of this application;
FIG. 7 is a schematic structural diagram of a navigation apparatus according to an embodiment of this application; and
FIG. 8 is a schematic structural diagram of an auxiliary navigation apparatus according to an embodiment of this application.

### DESCRIPTION OF EMBODIMENTS

The following describes the technical solutions in the embodiments of this application with reference to the accompanying drawings in the embodiments of this application.

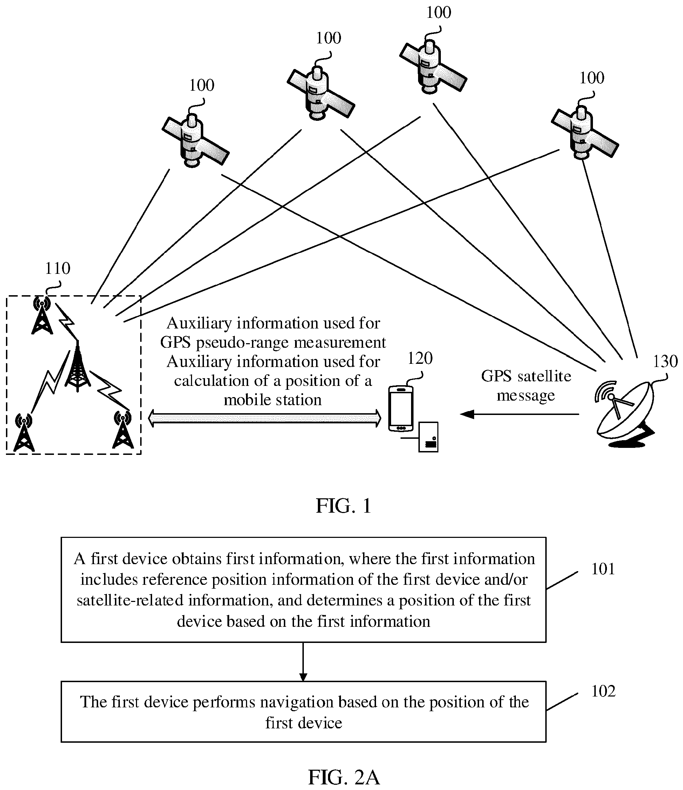

The global positioning system (Global Positioning System, GPS for short) is a satellite system including 24 satellites that cover the world, is the second-generation satellite navigation system of the United States, is developed on a basis of the meridian satellite navigation system, and provides information such as a user position and a speed, to finally realize a purpose of using the GPS for navigation and positioning. FIG. 1 is a schematic diagram of a GPS navigation system according to an embodiment of this application. As shown in FIG. 1, the GPS system adopts success experience of the meridian system, and like the meridian system, the GPS positioning system includes three parts: a space part, a ground monitoring part, and a user receiver. As shown in FIG. 1, the space part includes a plurality of GPS satellites 100, the ground monitoring part 110 includes a main control station, a monitoring station, and an injection station, and the user receiver is numbered 120. A basic principle of the GPS navigation system is as follows: A distance between a satellite whose position is known and a user receiver is measured, and then a specific position of the receiver is known based on data of a plurality of satellites. To achieve this purpose, the position of the satellite may be found by query in an ephemeris of the satellite based on a time recorded by a satellite-carried clock. The distance between a user and the satellite is obtained by recording time it takes for a satellite signal to propagate to the user and then multiplying the time by a speed of light (due to interference from the ionosphere in the atmosphere, this distance is not a true distance between the user and the satellite, but a pseudo-range (pseudo-range, PR)). The ground monitoring part 110 is responsible for generating a navigation message, calculating a satellite ephemeris and a satellite clock bias correction number, and the like. The GPS satellite 100 receives and stores the navigation message from the ground control part 110. When working properly, the GPS satellite continuously transmits a navigation message by using pseudo random code (pseudocode for short) including binary code elements 1 and 0. The navigation message includes information such as a satellite ephemeris, a working status, a clock correction, an ionospheric delay correction, and an atmospheric refraction correction. Content of the navigation message mainly includes a telemetry code, a conversion code, the first data block, the second data block, and the third data block, where most important data is ephemeris data. The user receiver 120 searches for and receives a GPS signal, and demodulates the GPS signal to obtain a navigation message. Alternatively, as shown in FIG. 1, a mobile network 130 may be used to assist in positioning. The mobile network 130 tracks and demodulates a GPS signal, and then forwards the demodulated GPS signal to the user receiver 120. The user receiver 120 then searches for a satellite and obtains a navigation message based on the GPS signal. Finally, the user receiver 120 extracts a satellite time from the navigation message and compares the satellite time with a clock of the user receiver 120 to obtain a distance between the satellite and a user, and then calculates, by using satellite ephemeris data in the navigation message, a position of the satellite when the satellite transmits the message. In this way, information such as a position and a speed that are of the user in a WGS-84 geodetic coordinate system can be obtained.

The user receiver may be user equipment (user equipment, UE), a mobile station (mobile station, MS), a mobile terminal (mobile terminal, MT), or the like, and is a device that provides voice and/or data connectivity for a user. For example, a terminal device includes a handheld device, a vehicle-mounted device, an internet of things device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a terminal device in a 5G network, a terminal device in a future evolved public land mobile network (Public Land Mobile Network, PLMN) or another future communications system, or the like.

It can be learned from the foregoing description that in a GPS positioning process, the user receiver needs to search for a satellite signal, and then perform positioning and navigation by receiving a navigation message sent by the satellite. However, in some cases, the user receiver may not be able to find a satellite signal. An example in which the user receiver is a vehicle terminal is used. For example, when passing through an extremely closed scene with a shielding material, such as an underground garage, a tunnel, or under a bridge, the vehicle terminal usually cannot find a satellite signal. Because satellite searching is a prerequisite for GPS positioning, the GPS cannot work properly if satellite searching cannot be smoothly performed.

Based on the foregoing reason, refer to FIG. 2A. FIG. 2A is a schematic flowchart of a navigation method according to an embodiment of this application. As shown in FIG. 2A, the method includes the following steps.

101: A first device obtains first information, where the first information includes reference position information of the first device and/or satellite-related information, and determines a position of the first device based on the first information.

The first device is the user receiver described in the foregoing content. A vehicle terminal is used as an example. When a vehicle starts navigation outdoors, satellite searching is quite fast. However, when the vehicle starts navigation in an underground garage, satellite searching is quite slow when the vehicle drives to the ground from the garage. This is because in a place where there is no GPS signal, a system keeps searching for a satellite and deletes satellite information used for last positioning. After the vehicle leaves the garage, the system re-searches for a signal. Consequently, satellite searching is slow, and the vehicle terminal cannot complete positioning.

For the foregoing problem, one solution is that the first device obtains the reference position information of the first device, and determines the position of the first device based on the reference position information.

The reference position information may be one or more of a longitude coordinate, a latitude coordinate, an altitude coordinate, a pseudo-range observation value, and a carrier phase observation value. Absolute position information of the reference position can be accurately described by using the three pieces of conventional position data: the longitude coordinate, the latitude coordinate, and the altitude coordinate. Therefore, all or some of the three pieces of position data may be obtained. The pseudo-range observation value is an observation value of a distance between a satellite and a phase center of an antenna of a receiver. Because there is an error between a receiver clock and a satellite clock inevitably, and a signal propagation process is affected by the troposphere and the ionosphere, the distance is not a true distance between the satellite and the receiver, and is referred to as a pseudo-range. The carrier phase measurement value is a measured phase delay from a GPS satellite carrier signal to the antenna of the receiver. The position of the first device can be determined based on either the pseudo-range observation value or the carrier phase measurement value.

However, the first device may obtain the several pieces of reference position information in different manners.

Optionally, when the first information is the reference position information, the obtaining first information includes: obtaining the reference position information based on a reference object. Optionally, the reference object includes at least one of a high-precision map, a two-dimensional code, and a road sign.

When the vehicle leaves the garage, the vehicle terminal may sense a specific road gate at an exit of the underground garage by using at least one of sensors such as a millimeter wave radar, a laser radar, or a camera. Based on information about the road gate, such as a road gate identifier or a road gate name, or based on an identifier, a two-dimensional code identifier, or the like that is of a specific building at the exit of the garage, and with reference to the high-precision map or a mapping relationship between intersections and these identifiers, the vehicle terminal may learn of initial position information of the vehicle when the vehicle leaves the garage.

A specific example is as follows: The vehicle terminal captures a road sign at the exit of the garage by using a camera, and parses out that key information is "exit B". Then, the vehicle terminal matches the "exit B" with the high-precision map, and obtains reference position information of the exit B from the high-precision map, where the reference position information of the exit B may include a longitude coordinate and a latitude coordinate, or may further include an altitude coordinate. A process of matching the high-precision map with the key information may be performed at the vehicle terminal, or it may be that the vehicle terminal sends the key information to a cloud, and the cloud performs matching and then feeds back a matching result to the vehicle terminal. In this embodiment of this application, the reference object includes the road sign and the high-precision map.

In this embodiment of this application, the vehicle terminal obtains the reference position information based on the reference object detected by the vehicle terminal, thereby ensuring accuracy of the position information.

The obtaining first information includes: receiving the first information sent by a second device.

When the first information includes the reference position information, the first device may perform measurement based on the reference object and obtain, based on a data processing result of measurement information, the reference position information to determine the position of the first device. In addition, the first device may receive the reference position information sent by the second device to determine the position of the first device.

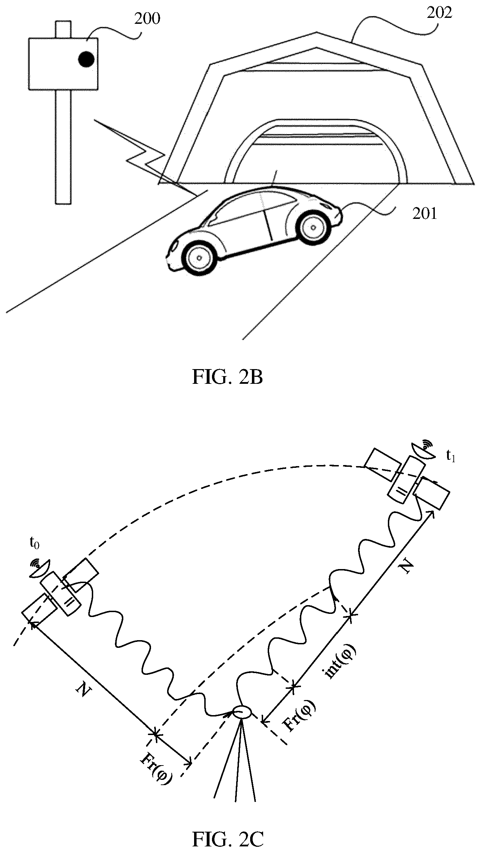

The second device may be a roadside unit. FIG. 2B is a schematic diagram of obtaining reference position information from a roadside unit in a single-exit scenario according to an embodiment of this application. As shown in FIG. 2B, a garage includes a garage exit 202. When a vehicle just leaves the garage exit 202, a vehicle terminal 201 (the first device) obtains reference position information from the roadside unit 200.

The reference position information that the vehicle terminal 201 obtains from the roadside unit 200 may be one or more pieces of position data of a longitude coordinate, a latitude coordinate, and an altitude coordinate that are of the roadside unit. Therefore, absolute position information of the reference position is accurately described. Alternatively, the vehicle terminal 201 may obtain a pseudo-range observation value from the roadside unit 200. The pseudo-range observation value is an observation value of a distance between a GPS satellite and a phase center of a receive antenna of the roadside unit. The vehicle terminal uses the pseudo-range observation value as an observation value of a pseudo-range between the vehicle terminal 201 and the GPS satellite, and determines the position of the vehicle terminal 201 based on the pseudo-range observation value.

The reference position information that the vehicle terminal 201 obtains from the roadside unit 200 may alternatively be a carrier phase observation value. A carrier is a cosine wave without any mark. FIG. 2C is a schematic diagram of obtaining a carrier phase observation value according to an embodiment of this application. As shown in FIG. 2C, a phase detector in a user receiver can measure only a part *Fr*(*φ*) in which a carrier phase is less than an entire cycle, and a quantity N of entire cycles is unknown. In this case, a carrier phase observation value *ϕ = N + Fr*(*φ*)*.* After locking a satellite signal and performing the first carrier phase measurement, the receiver records a quantity of entire bands in a carrier phase change process by using a Doppler counter. The recorded quantity of entire bands is referred to as an entire cycle count int(*φ*). In this case, a complete carrier phase observation value includes three parts (Φ *= N + Fr*(*φ*) + int(*φ*)). Because the receiver cannot provide N, N needs to be obtained through another means. Provided that the receiver can keep continuously tracking the satellite signal without being out-of-lock, all values obtained through continuous carrier phase observations of the same satellite signal include same ambiguity of entire cycles. Reasons such as satellite blocking result in a jump in the entire cycle count, referred to as a cycle slip. Cycle-slip detection and repair work need to be further performed before data processing is performed for the carrier.

The roadside unit 200 is located outside the garage exit, and has a comparatively fixed and stable position. Therefore, a GPS receiver of the roadside unit 200 can keep continuously tracking the satellite signal without being out-of-lock, and a probability of a cycle slip occurrence is also comparatively small. Therefore, when the vehicle drives out of the blocked underground garage and cannot restore a capability of fast satellite searching, a pseudo-range observation value and/or a carrier phase observation value sent by the roadside unit 200 may be used to help the vehicle perform fast positioning.

In addition, the reference position information in the roadside unit 200 may be obtained through measurement performed by at least one of sensors, such as a millimeter wave radar, a laser radar, or a camera, integrated in the roadside unit, or may be sent by another terminal that can communicate with the roadside unit. The terminal may be in a stationary state or a moving state, and may be, for example, a fixed network access device or a moving vehicle-mounted terminal or flying terminal.

Optionally, the reference position information of the first device includes a plurality of reference positions and identifiers of the plurality of reference positions.

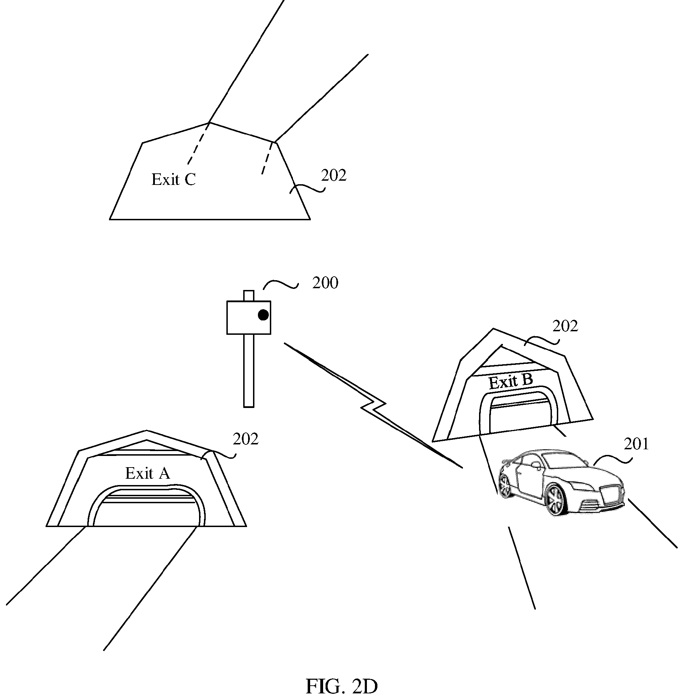

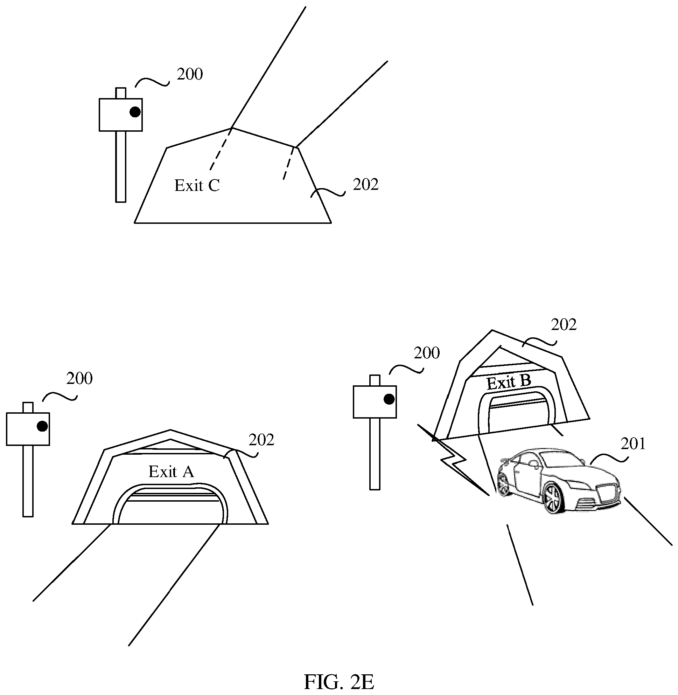

In the single-exit scenario, when the vehicle leaves the garage exit, the roadside unit only needs to send reference position information of the current exit. In some cases, an underground garage has a plurality of exits. A vehicle terminal needs to determine a specific exit from which the vehicle terminal finally leaves, to further determine a position of the vehicle. FIG. 2D is a schematic diagram of obtaining reference position information from a roadside unit in a multi-exit case according to an embodiment of this application. As shown in FIG. 2D, a garage includes a plurality of garage exits 202, but a roadside unit 200 is not necessarily disposed at each exit, and the plurality of exits correspond to one roadside unit 200. The roadside unit 200 sends each exit identifier, including an exit number or an exit name, and position information corresponding to the exit identifiers to the vehicle terminal 201, as reference position information received by the vehicle terminal. When leaving an exit, the vehicle determines a current exit number or name by scanning a specific marker or two-dimensional code, or the vehicle may identify, by using a sensor, a road sign installed near an exit of a parking lot. The road sign is a code or pattern generated according to a specific rule, and nearby-exit information corresponding to the road sign is mapped to a corresponding code or pattern. For example, when driving out, the vehicle in FIG. 2D determines, by scanning a road sign, that a current exit is an exit B. In this case, the vehicle terminal 201 may determine position information of the exit B based on reference position information obtained from the roadside unit 200, and further determine a current position of the vehicle. Alternatively, refer to FIG. 2E. FIG. 2E is a schematic diagram of obtaining reference position information in another multi-exit case according to an embodiment of this application. As shown in FIG. 2E, a garage includes a plurality of garage exits 202, and a roadside unit 200 is disposed at each exit. Each roadside unit 200 sends same reference position information to a vehicle terminal, including exit identifiers of the plurality of garage exits and position information corresponding to the exit identifiers. Then, the vehicle determines, by scanning a marker, a two-dimensional code, or a road sign, that a current exit is an exit B, and obtains position information corresponding to the exit B, to determine a current position of the vehicle. It is assumed that the reference position information received by the vehicle terminal is shown in Table 1.

**Table 1**

| Exit identifier | Position information |
|---|---|
| Exit A | (East longitude: X11; north latitude: X12) |
| Exit B | (East longitude: X21; north latitude: X22) |
| Exit C | (East longitude: X31; north latitude: X32) |
| Exit D | (East longitude: X41; north latitude: X42) |

X11 to X42 in the table are longitude and latitude values. For example, (east longitude: X11; north latitude: X12) may be (east longitude: 115.7°; north latitude: 39.4°). Because a distance between exits of a same garage is comparatively short, longitude and latitude coordinates may retain more decimal places, such as two or three decimal places, to more precisely locate a position of each exit.

When identifying that the current exit is the exit B, the vehicle terminal may perform matching with the reference position information in Table 1, obtain (east longitude: X21; north latitude: X22), and use (east longitude: X21; north latitude: X22) as a current position of the vehicle terminal.

Alternatively, a large quantity of sensors may be deployed in a parking lot, such as a camera, a radar, or a geomagnetic sensor. Based on detection information obtained by the large quantity of sensors in the parking lot, a parking lot processor may quite easily determine a position of a vehicle, and then send position information of the vehicle to the vehicle, so that the vehicle may also obtain information about an exit at which the vehicle is located. Herein, a method for obtaining exit information by a vehicle is not specifically limited.

In the foregoing process, the roadside unit may send the reference position information to the vehicle terminal at a specific interval, for example, perform broadcasting to a passing vehicle once every one second. Certainly, another interval setting value may be alternatively applied, for example, 0.5s, 0.2s, or 2s. This is not specifically limited herein. Alternatively, the roadside unit may send the reference position information to the vehicle terminal based on request information that is for obtaining the reference position information and that is sent by the vehicle terminal. Alternatively, the roadside unit may proactively detect whether there is a vehicle leaving a garage exit, and if there is a vehicle leaving a garage exit, the roadside unit sends reference position information to the corresponding vehicle terminal.

In this embodiment of this application, the roadside unit provides the reference position information. Because the roadside unit has a fixed location and a stable signal, the reference position information sent by the roadside unit is highly reliable and is easy to obtain. In addition, obtaining the reference position information directly from the roadside unit can improve obtaining efficiency.

The second device may alternatively be another device. In other words, the first device may obtain the first information from the another device. The another device may be another fixed network access device outside a garage exit, a moving vehicle-mounted terminal or flying terminal, or the like.

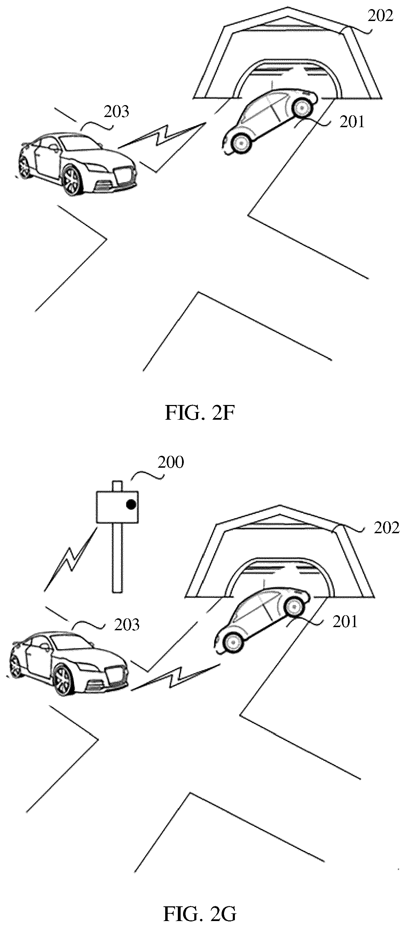

For example, when the first device is a vehicle terminal, in a scenario in which the vehicle terminal leaves a garage exit, refer to FIG. 2F. FIG. 2F is a schematic diagram of obtaining reference position information from another device according to an embodiment of this application. As shown in FIG. 2F, when a vehicle terminal 201 (the first device) leaves a garage, and the another device is another vehicle terminal 203 passing the garage, the another vehicle terminal 203 may send reference position information to the vehicle terminal 201 (the first device) leaving the garage. The reference position information includes a longitude coordinate of the another vehicle terminal 203, a latitude coordinate of the another vehicle terminal 203, an altitude coordinate of the another vehicle terminal 203, a pseudo-range observation value or a carrier phase observation value obtained when the another vehicle terminal 203 performs GPS navigation, or the like. The another vehicle terminal 203 may send the reference position information to a specific vehicle terminal based on received request information. The request information may be sent by the vehicle terminal 201 leaving a garage exit, or may be sent by a roadside unit 200 at a garage exit.

In this embodiment of this application, the another device may be any device that can communicate with the vehicle terminal. Therefore, when no roadside unit is disposed at the garage exit or a roadside unit is faulty, the another device sends the reference position information to the vehicle terminal when receiving a request from the vehicle terminal, thereby improving a probability that the vehicle terminal successfully obtains the reference position information.

In addition, because the vehicle terminal is in a moving state, a reference position of the vehicle terminal is also changing. FIG. 2G is another schematic diagram of obtaining reference position information from another device according to an embodiment of this application. When a vehicle terminal 201 leaves an exit of a garage, if there is another vehicle passing the garage, and the another vehicle is closer to the vehicle terminal than a roadside unit, the vehicle terminal 201 may send request information to the another vehicle terminal 203 to obtain reference position information. Alternatively, it may be that when the roadside unit 200 detects that a distance between the vehicle terminal 201 and the another vehicle terminal 203 is less than a distance between the vehicle terminal 201 and the roadside unit 200, the roadside unit 200 sends prompt information to the another vehicle terminal 203, to prompt the another vehicle terminal 203 to send the reference position information to the vehicle terminal 201. The reference position information sent by the another vehicle terminal 203 may be current position information obtained through positioning performed by a positioning system of the another vehicle terminal 203.

It can be learned that in this embodiment of this application, considering a characteristic that the first device is moving, the second device may be another vehicle terminal. When the another vehicle terminal moves near the first device, the another vehicle terminal sends reference position information to the first device, thereby improving accuracy of obtaining position information of the first device based on the reference position information.

In addition, if the vehicle terminal receives a plurality of pieces of reference position information sent by a plurality of second devices, the vehicle terminal may select the reference position information sent by the second device that is closest to the vehicle terminal as position information of the vehicle terminal. Alternatively, the vehicle terminal may calculate accurate position information of the vehicle terminal based on the plurality of pieces of reference position information and distances between the plurality of second devices and the vehicle terminal. The distances may be determined through detection performed by the vehicle terminal, or may be determined based on a chronological order of obtaining the reference position information. Usually, the second device whose reference position information is obtained first is closest to the vehicle terminal.

Alternatively, the second device may be a combination of a roadside unit and another device. In other words, the first device may receive the reference position information from both the roadside unit and the another device. Because the roadside unit has a fixed location, the roadside unit may send reference position information obtained by the roadside unit, such as a longitude coordinate, a latitude coordinate, and an altitude coordinate, to the first device. Because the another device may include a GPS positioning system, the another device may send reference position information obtained by the another device, such as a pseudo-range observation value and a carrier phase observation value, to the first device. The first device performs mutual verification on the different types of reference position information received, to obtain a final position, thereby improving precision of the obtained position. Alternatively, the roadside unit may send a part of reference position information obtained by the roadside unit, such as a garage exit identifier and a garage exit location, to the first device; and the another vehicle device sends another part of reference position information obtained by the another vehicle device, such as a garage road sign captured by a camera, to the first device. The first device obtains a final position based on a combination of the reference position information obtained from the two different second devices, thereby improving reliability of the obtained position.

It can be learned that in this embodiment of this application, the first device may obtain the reference position information based on the reference object, or receive the reference position information from the second device. The second device may be a roadside unit, or may be another device, or may be a combination of a roadside unit and another device. In addition, when the second device includes the another device, the reference position information sent by the another device may be sent as requested or prompted by a roadside unit. In this process, the reference position information is provided for the first device, thereby optimizing a positioning process of the first device, and helping the first device quickly complete positioning of the first device.

According to the invention, the method for resolving the problem of slow satellite searching caused by the system re-searching for a signal after the vehicle terminal leaves the garage is as follows: The first device receives satellite-related information sent by a second device.

The satellite-related information includes at least one of a quantity of found satellites, an angle of each satellite, a frequency of each satellite, positioning time information, and satellite ephemeris information. After receiving the satellite-related information, the first device quickly restores satellite searching, establishes connections to these satellites, and receives satellite signals, to complete positioning and navigation of the first device.

Likewise, the second device may include a roadside unit. The roadside unit includes a GPS satellite positioning system, may obtain satellite-related data directly from a GPS satellite, and store the satellite-related data. Alternatively, the roadside unit may be connected to another terminal or device with a GPS positioning system, and obtain satellite-related data from the terminal or device. The roadside unit may broadcast, at a specific interval, the satellite-related information to a vehicle terminal (the first device) leaving a garage exit. Alternatively, the roadside unit may proactively detect whether there is a vehicle leaving a garage exit, and then send the satellite-related information to a detected vehicle. Alternatively, the roadside unit may feed back the satellite-related information to a requesting vehicle terminal after receiving a satellite-related information request initiated by the vehicle terminal.

According to the invention, the second device is another device, in particular another vehicle terminal. The another device may also directly obtain satellite-related data by using a GPS satellite positioning system, or obtain satellite-related data from another terminal. The another vehicle terminal may perform GPS satellite positioning. In addition, the satellite-related information is stored in the another vehicle terminal, and the another vehicle terminal sends the satellite-related information to the first device. The first device may restore satellite searching directly based on the satellite-related information, thereby helping the first device quickly restore satellite searching. In addition, the another device may alternatively be a mobile phone terminal device. Because the mobile phone terminal device has a better GPS satellite positioning function, the mobile phone terminal device may be alternatively used to send the satellite-related information to the first device.

The second device may alternatively include both a roadside unit and another device. The first device may obtain satellite-related data describing a same parameter simultaneously from the roadside unit and the another device, for example, obtain satellite ephemeris data from both the roadside unit and the another device, and then perform mutual verification, to determine final satellite ephemeris data. Alternatively, the first device may obtain satellite-related data describing different parameters from the roadside unit and a vehicle terminal, for example, obtain satellite ephemeris data from the roadside unit, and obtain a quantity of found satellites, an angle of each satellite, a frequency of each satellite, and the like from the vehicle terminal, and then the first device searches for a satellite based on a combination of these different satellite-related data. In this process, it may be that the roadside unit and the another vehicle terminal simultaneously send the satellite-related data, or may be that after sending the satellite-related data, the roadside unit notifies the another vehicle terminal to send the satellite-related data to the first device. The another vehicle terminal may send ephemeris data in real time based on a requirement of the first device, as a supplement.

It should be noted that when the second device provides the satellite-related information to the first device, the second device is also autonomously searching for a satellite at the same time, to obtain satellite-related information. Therefore, the first device may directly restore satellite searching directly based on the complete satellite-related information (including the quantity of satellites, the angle of each satellite, the frequency of each satellite, the positioning time information, the satellite ephemeris data, and the like) sent by the second device, or may quickly restore satellite searching based on a part of satellite-related information currently obtained by the first device through searching and with reference to the another part of satellite-related information obtained from the second device (as a supplement).

It can be learned that in this embodiment of this application, the first device may receive the satellite-related information from the second device. The second device may be a roadside unit or a vehicle terminal, or may be a combination of a roadside unit and a vehicle terminal. The satellite-related information received by the first device may be separately sent by the roadside unit or the vehicle terminal, or may be jointly sent by the roadside unit and the vehicle terminal. Then, the first device searches for a satellite based on the received satellite-related information. In this process, the satellite-related information is directly provided for the first device, which helps quickly restore a satellite searching function of the first device, and effectively avoiding a problem of slow satellite searching restoration caused by that the first device can restore the satellite searching function only after obtaining all satellite-related information from a GPS satellite.

Still another method for resolving the problem of slow satellite searching caused by the system re-searching for a signal after the vehicle terminal leaves the garage is as follows: The first device receives reference position information and satellite-related information that are sent by a second device.

In other words, the first information obtained by the first device may include both the reference position information and the satellite-related information. A method for obtaining the reference position information is as described above, and the reference position information may be obtained based on a reference object, may be separately sent by a roadside unit or a vehicle terminal, or may be jointly sent by a roadside unit and a vehicle terminal. The satellite-related information may also be separately sent by a roadside unit or a vehicle terminal, or may be jointly sent by a roadside unit and a vehicle terminal.

In a feasible example, it may be that the roadside unit sends the reference position information to the first device, and another vehicle terminal sends the satellite-related information to the first device. This is because the roadside unit is just outside a garage exit. Assuming that the first device is a vehicle terminal leaving the garage exit, reference position information sent by the roadside unit to the vehicle terminal is from a device close to the vehicle terminal, and has more reference value. Because the another vehicle terminal is being in a navigation state when passing a garage, the satellite-related information sent by the another vehicle terminal is also valuable for satellite searching of the vehicle terminal leaving the garage exit.

It can be learned that in this embodiment of this application, the first device may obtain both the reference position information and the satellite-related information, thereby implementing both fast positioning and fast satellite searching for the first device, further enabling the first device to quickly restore navigation, and improving efficiency of restoring navigation from a signal unavailable area to a signal available area.

102: The first device performs navigation based on the position of the first device.

The first device can complete positioning based on the received reference position information, or can quickly restore satellite searching based on the received satellite-related information, and then further complete positioning with reference to a satellite signal received by the first device. Regardless of which manner is used, the first device finally can determine the current position of the first device. Determining the position of the first device is ultimately for navigating the first device, that is, planning a route for the first device based on a destination place and the current position that are of the first device. The first device follows the planned route. In this process, the first device continuously performs satellite searching and positioning, to update the planned route in a timely manner.

It can be learned that in this embodiment of this application, the first device obtains the first information, determines the position of the first device based on the first information, and finally navigates the first device based on the position of the first device. The first information includes the reference position information of the first device and/or the satellite-related information, to help the first device quickly perform positioning or satellite searching, thereby improving efficiency of the first device in restoring satellite searching and performing accurate navigation.

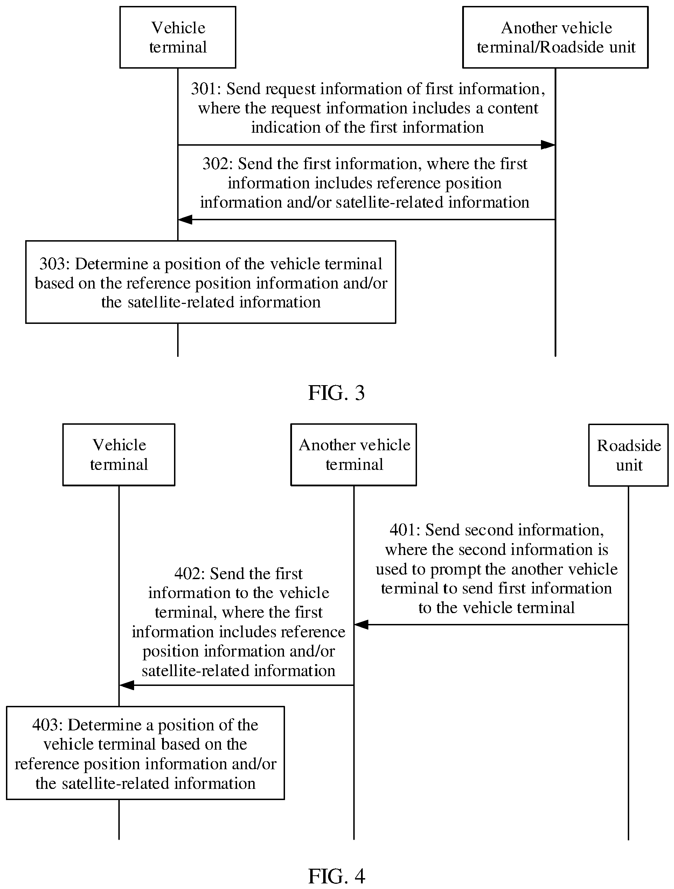

FIG. 3 is a schematic flowchart of another navigation method according to an embodiment of this application. As shown in FIG. 3, the method includes the following steps.

301: A vehicle terminal sends request information of first information to a second device, where the request information includes a content indication of the first information, and the second device includes a roadside unit or another device.

302: The second device sends the first information to the vehicle terminal, where the first information includes reference position information and/or satellite-related information.

303: The vehicle terminal determines a position of the vehicle terminal based on the reference position information and/or the satellite-related information.

In this embodiment of this application, when the vehicle terminal leaves an exit of a garage, there is a problem that satellite searching is difficult, which results in being unable to perform positioning and navigation. Therefore, the vehicle terminal may send the request information of the first information to the roadside unit or the another device, where the request information includes the content indication of the first information. The content indication herein is content of the first information that the vehicle terminal device expects the second device to send, for example, the reference position information, the satellite-related information, or both the reference position information and the satellite-related information. This is not specifically limited herein. When the reference position information is obtained, the reference position information can help the vehicle terminal quickly perform positioning. When the satellite-related information is obtained, the satellite-related information can help the vehicle terminal quickly perform satellite searching. When both pieces of information are obtained, the two pieces of information can help the vehicle terminal quickly perform positioning, and further correct position information of the vehicle terminal through satellite searching and positioning, thereby improving positioning accuracy while ensuring positioning efficiency. This helps the vehicle terminal quickly restore satellite searching, and further ensures accuracy of subsequent navigation.

FIG. 4 is a schematic flowchart of another navigation method according to an embodiment of this application. As shown in FIG. 4, the method includes the following steps.

401: The roadside unit sends second information to another vehicle terminal, where the second information is used to prompt the another vehicle terminal to send the first information to the vehicle terminal.

402: The another vehicle terminal sends the first information to the vehicle terminal, where the first information includes reference position information and/or satellite-related information.

403: The vehicle terminal determines a position of the vehicle terminal based on the reference position information and/or the satellite-related information.

In this embodiment of this application, when the vehicle terminal leaves an exit of a garage, there is a problem that satellite searching is difficult, which results in being unable to perform positioning and navigation, and a communication function of the vehicle terminal may also be unavailable. Therefore, when detecting the vehicle terminal, a roadside unit at the exit of the garage notifies another vehicle terminal passing the garage to send reference position information or satellite-related information to the vehicle terminal, or to send both reference position information and satellite-related information. In this case, the roadside unit detects a position of the vehicle terminal and requests the first information from the another vehicle terminal, instead of the vehicle terminal initiating a request application of the first information, thereby avoiding a communication delay caused by a poor communication effect existing when the vehicle terminal just leaves the garage. The first information is sent to the vehicle terminal by the another vehicle terminal, that is, same navigation-related information is sent to the vehicle terminal for navigation, thereby improving reference value of the first information. When the vehicle terminal obtains the reference position information, the reference position information can help the vehicle terminal quickly perform positioning. When the vehicle terminal obtains the satellite-related information, the satellite-related information can help the vehicle terminal quickly perform satellite searching. When the vehicle terminal obtains both pieces of information, the two pieces of information can help the vehicle terminal quickly perform positioning, and further correct position information of the vehicle terminal through restoration of a satellite searching capability, thereby improving positioning accuracy while ensuring positioning efficiency. This helps the vehicle terminal quickly restore satellite searching and positioning capabilities.

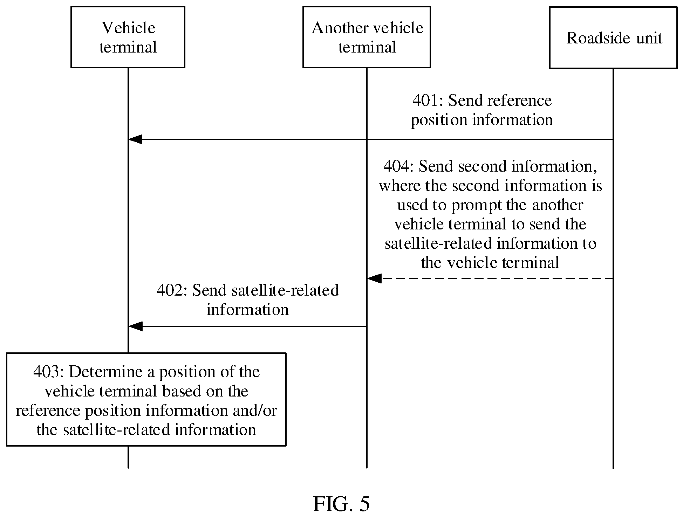

FIG. 5 is a schematic flowchart of another navigation method according to an embodiment of this application. As shown in FIG. 5, the method includes the following steps.

501: The roadside unit sends reference position information to the vehicle terminal.

502: The another vehicle terminal sends satellite-related information to the vehicle terminal.

503: The vehicle terminal determines a position of the vehicle terminal based on the reference position information and/or the satellite-related information.

In this embodiment of this application, when the vehicle terminal leaves an exit of a garage, there is a problem that satellite searching is difficult, which results in being unable to perform positioning and navigation. In this case, a roadside unit at a fixed position outside the garage and another vehicle terminal passing the garage may detect the vehicle terminal, and send first information to the vehicle terminal. The roadside unit sends the reference position information. Because the roadside unit is closer to a position of the vehicle terminal, the reference position information sent by the roadside unit has more reference value. The another vehicle terminal sends the satellite-related information. Because the satellite-related information sent by the another vehicle terminal is used for vehicle navigation and the vehicle terminal also needs to perform vehicle navigation, the satellite-related information obtained from the another vehicle terminal has more reference value.

According to the invention, before the another vehicle terminal sends the satellite-related information to the vehicle terminal, the method further includes:
504: The roadside unit sends second information to the another vehicle terminal, where the second information is used to prompt the another vehicle terminal to send the satellite-related information to the vehicle terminal.

When the vehicle terminal just leaves the exit of the garage, in addition to that a GPS navigation function is unavailable, a communication function may also be unavailable. Therefore, the vehicle terminal may not send request information. Instead, the roadside unit automatically sends the reference position information to the vehicle terminal when detecting the vehicle terminal. In addition, because the another vehicle terminal outside the garage is farther away from the vehicle terminal, or the communication function of the vehicle terminal is not restored, the roadside unit needs to send the second information to the another vehicle terminal, to prompt the another vehicle terminal to send the satellite-related information to the vehicle terminal, thereby avoiding a communication delay caused by a poor communication effect existing when the vehicle terminal just leaves the garage.

When the vehicle terminal obtains the reference position information, the reference position information can help the vehicle terminal quickly perform positioning. When the vehicle terminal obtains the satellite-related information, the satellite-related information can help the vehicle terminal quickly perform satellite searching. When the vehicle terminal obtains both pieces of information, the two pieces of information can help the vehicle terminal quickly perform positioning, and further correct position information of the vehicle terminal through satellite searching and positioning, thereby improving positioning accuracy while ensuring positioning efficiency. This helps the vehicle terminal quickly restore navigation in a case of loss of positioning information.

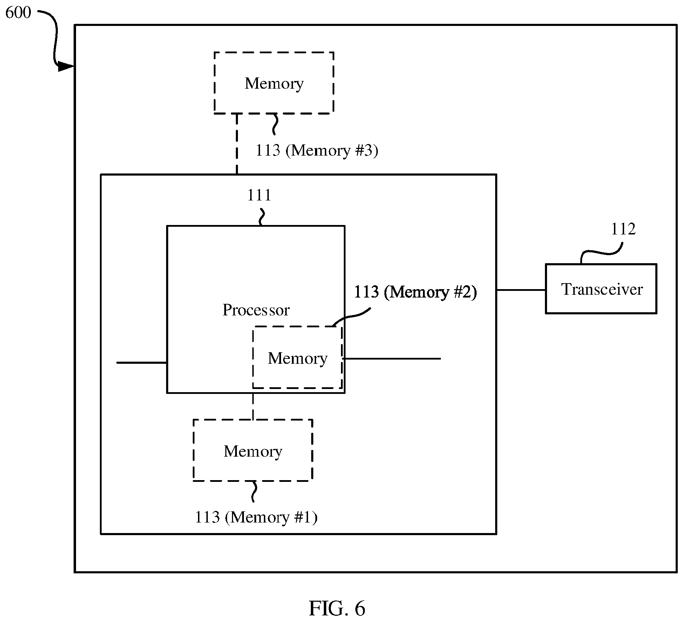

FIG. 6 is a structural block diagram of a communications apparatus 600 according to an embodiment of this application. It should be understood that the communications apparatus 600 can perform steps performed by the first device or the second device in the methods in FIG. 2A and FIG. 3 to FIG. 5. To avoid repetition, details are not described herein again. The communications apparatus 600 includes a processor 111 and a memory 113. The processor 111 and the memory 113 are electrically coupled.

The memory 113 is configured to store a computer program instruction. Optionally, the memory 113 (a memory #1) is located in the apparatus, the memory 113 (a memory #2) is integrated with the processor 111, or the memory 113 (a memory #3) is located outside the apparatus.

The processor 111 is configured to execute some or all of the computer program instructions in the memory. When the some or all of the computer program instructions are executed, the apparatus is enabled to perform the method described in any one of the foregoing embodiments.

Optionally, a transceiver 112 is further included and configured to communicate with another device, for example, obtain first information, where the first information includes reference position information of the first device and/or satellite-related information.

It should be understood that the communications apparatus 600 shown in FIG. 6 may be a chip or circuit, for example, a chip or circuit that can be disposed in a terminal apparatus or a communications apparatus. The transceiver 112 may alternatively be a communications interface. The transceiver includes a receiver and a transmitter. Further, the communications apparatus 600 may further include a bus system.

The processor 111, the memory 113, and the transceiver 112 are connected by using the bus system. The processor 111 is configured to execute the instruction stored in the memory 113, to control the transceiver to receive a signal and send a signal, to perform steps performed by the first device or the second device in the implementation method in this application. The memory 113 may be integrated in the processor 111, or may be disposed separately from the processor 111.

In an implementation, it may be considered that a function of the transceiver 112 is implemented by a transceiver circuit or a dedicated transceiver chip. It may be considered that the processor 111 is implemented by a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL) device, another programmable logic device, a discrete gate or transistor logic device, a discrete hardware component, or the like, or any combination thereof. The general-purpose processor may be a microprocessor, or the processor may be any conventional processor or the like.

It should be further understood that the memory mentioned in the embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any other memory of a suitable type.

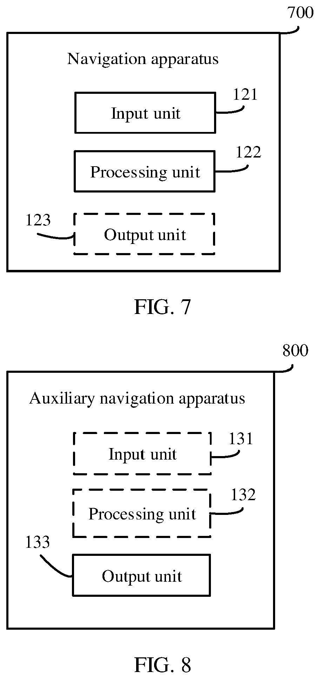

FIG. 7 shows a navigation apparatus 700 according to an embodiment of this application. The navigation apparatus 700 may be used to perform the foregoing navigation method and specific embodiments that are applied to a first device. The apparatus may be a communications device or a chip in a communications device. As shown in FIG. 7, the apparatus includes an input unit (Input(s)) 121 and a processing unit 122.

The input unit 121 is configured to obtain first information, where the first information includes reference position information of the first device and/or satellite-related information.

The processing unit 122 is configured to: determine a position of the first device based on the first information, and navigate the first device based on the position of the first device.

Optionally, the apparatus further includes an output unit 123. The output unit 123 is configured to output navigation information.

Optionally, the input unit 121 is further configured to: obtain the reference position information based on a reference object or receive the first information sent by a second device.

Optionally, the output unit 123 is further configured to send request information of the first information to the second device, where the request information includes a content indication of the first information.

Optionally, the processing unit 122 may be a chip, an encoder, an encoding circuit, or another integrated circuit that can implement the method in this application.

Specific methods and embodiments have been described above. The apparatus 700 is only used to perform the navigation method applied to the first device. Therefore, for a specific description of the configuration method, especially a function of the logic circuit 122 or a function of the output interface 123, refer to a related part in a corresponding embodiment, and details are not described herein again.

FIG. 8 shows an auxiliary navigation apparatus 800 according to an embodiment of this application. The auxiliary navigation apparatus 800 may be used to perform the foregoing navigation method and specific embodiments that are applied to a second device. As shown in FIG. 8, the apparatus includes an output unit (Output(s)) 133, configured to send first information to a first device, where the first information includes reference position information of the first device and/or satellite-related information, so that the first device determines a position of the first device based on the first information, and further navigates the first device.

Optionally, the apparatus includes an input unit 131, configured to receive request information, where the request information includes a content indication of the first information.

Optionally, the apparatus further includes a processing unit 132, configured to generate the first information.

Optionally, the input unit 131 is configured to receive second information sent by a roadside unit, where the second information is used to indicate the apparatus to send the first information to the first device.

Optionally, the processing unit 132 may be a chip, an encoder, an encoding circuit, or another integrated circuit that can implement the method in this application.

Specific methods and embodiments have been described above. The apparatus 800 is only used to perform the navigation method applied to the second device. Therefore, for a specific description of the configuration method, especially a function of the output interface 133, refer to a related part in a corresponding embodiment, and details are not described herein again.

An embodiment of this application provides a computer storage medium, which stores a computer program. The computer program is used to perform the foregoing method.

An embodiment of this application provides a computer program product including an instruction. When the computer program product is run on a computer, the computer is enabled to perform the foregoing provided method.

An embodiment of this application provides a communications system. The communications system includes the foregoing navigation apparatus and the foregoing auxiliary navigation apparatus. Optionally, the communications system may further include another network device and/or a terminal.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual communication connections may be implemented through some interfaces. The indirect couplings or communication connections between the apparatuses or units may be implemented in electrical, mechanical, or other forms.

In addition, units in the apparatus embodiments of this application may be integrated into one processing unit, or each of the units may exist alone physically, or two or more units are integrated into one unit.

It may be understood that the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, a transistor logic device, a hardware component, or any combination thereof. The general-purpose processor may be a microprocessor or any conventional processor or the like.

All or some of the methods in the embodiments of this application may be implemented by software, hardware, firmware, or any combination thereof. When software is used to implement the embodiments, the embodiments may be implemented completely or partially in a form of a computer program product. The computer program product includes one or more computer programs or instructions. When the computer programs or instructions are loaded and executed on a computer, the procedures or functions according to the embodiments of this application are all or partially generated. The computer may be a general-purpose computer, a dedicated computer, a computer network, or another programmable apparatus. The computer programs or instructions may be stored in a computer readable storage medium, or may be transmitted by using the computer readable storage medium. The computer readable storage medium may be any usable medium accessible by a computer, or a data storage device such as a server integrating one or more usable media. The usable medium may be a magnetic medium, for example, a floppy disk, a hard disk, or a magnetic tape, or may be an optical medium, for example, a CD-ROM or a DVD, or may be a semiconductor medium, for example, a solid state disk (solid state disk, SSD), a random access memory (random access memory, RAM), a read-only memory (read-only memory, ROM), or a register.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

## Claims

1. A navigation method, performed by a second device (203), wherein the method comprises:
receiving second information sent by a roadside unit (200), wherein the second information is prompt information configured to prompt the second device (203) to send first information to a first device (201);
sending first information to the first device (201), wherein the first information comprises satellite-related information;
wherein each of the first device and the second device is a vehicle terminal (203); and wherein the satellite-related information comprises at least one of a quantity of found satellites (100), an angle of each satellite, a frequency of each satellite, positioning time information, and satellite ephemeris information.

2. The method according to claim 1, wherein the first information additionally comprises reference position information of the first device (201).

3. The method according to claim 2, wherein the reference position information of the first device comprises a plurality of reference positions and identifiers of the plurality of reference positions.

4. The method according to claim 2 or claim 3, wherein the reference position information of the first device comprises at least one of a longitude coordinate, a latitude coordinate, an altitude coordinate, a pseudo-range observation value, and a carrier phase observation value.

5. The navigation method, according to any of claims 1 to 4, wherein the method further comprises:
when detecting, by the roadside unit (200), the first device (201), sending, by the roadside unit, the second information to the second device (203).

6. The method according to claim 5, wherein the detecting a first device (201) comprises detecting the first device when it leaves an exit of a garage, a tunnel or under a bridge.

7. A combination of a vehicle terminal and a roadside unit, wherein the vehicle terminal is configured to perform the steps of the second terminal in the method according to any one of claims 1 to 4, and the roadside terminal is configured to perform the steps of the roadside terminal in the method according to any one of claims 5 to 6.

8. A computer-readable storage medium, comprising a program, wherein when the program is executed by a processor, the method according to any one of claims 1 to 4 is performed.

9. A computer program product including instructions, wherein when the computer program product is run on a computer, the computer is enabled to perform the steps in the method according to any one of claims 1 to 4.

## Patentansprüche

1. Navigationsverfahren, das durch eine zweite Vorrichtung (203) durchgeführt wird, wobei das Verfahren Folgendes umfasst:
Empfangen zweiter Informationen, die durch eine straßenseitige Einheit (200) gesendet werden, wobei die zweiten Informationen sofortige Informationen sind, die dazu konfiguriert sind, dass die zweite Vorrichtung (203) aufzufordern, erste Informationen an eine erste Vorrichtung (201) zu senden;
Senden erster Informationen an die erste Vorrichtung (201), wobei die ersten Informationen satellitenbezogene Informationen umfassen;
wobei jede der ersten Vorrichtung und der zweiten Vorrichtung ein Fahrzeugendgerät (203) ist; und wobei die satellitenbezogenen Informationen mindestens eine von einer Anzahl gefundener Satelliten (100), eines Winkels jedes Satelliten, einer Frequenz jedes Satelliten, Positionszeitinformationen und Informationen zu Satelliten-Ephemeriden umfassen.

2. Verfahren nach Anspruch 1, wobei die ersten Informationen zusätzlich Referenzpositionsinformationen der ersten Vorrichtung (201) umfassen.

3. Verfahren nach Anspruch 2, wobei die Referenzpositionsinformationen der ersten Vorrichtung eine Vielzahl von Referenzpositionen und Kennungen der Vielzahl von Referenzpositionen umfassen.

4. Verfahren nach Anspruch 2 oder 3, wobei die Referenzpositionsinformationen der ersten Vorrichtung mindestens eine von einer Längenkoordinate, einer Breitenkoordinate, einer Höhenkoordinate, eines Pseudo-Bereichsbeobachtungswerts und eines Trägerphasenbeobachtungswerts umfassen.

5. Navigationsverfahren nach einem der Ansprüche 1 bis 4, wobei das Verfahren ferner Folgendes umfasst:
beim Erkennen der ersten Vorrichtung (201) durch die straßenseitige Einheit (200), Senden der zweiten Informationen durch die straßenseitige Einheit an die zweite Vorrichtung (203).

6. Verfahren nach Anspruch 5, wobei das Erfassen einer ersten Vorrichtung (201) das Erfassen der ersten Vorrichtung umfasst, wenn sie eine Ausfahrt einer Garage, eines Tunnels oder unter einer Brücke verlässt.

7. Kombination aus einem Fahrzeugendgerät und einer straßenseitigen Einheit, wobei das Fahrzeugendgerät dazu konfiguriert ist, die Schritte des zweiten Endgeräts in dem Verfahren nach einem der Ansprüche 1 bis 4 durchzuführen, und das straßenseitige Endgerät dazu konfiguriert ist, die Schritte des straßenseitigen Endgeräts in dem Verfahren nach einem der Ansprüche 5 bis 6 durchzuführen.

8. Computerlesbares Speichermedium, umfassend ein Programm, wobei, wenn das Programm durch einen Prozessor ausgeführt wird, das Verfahren nach einem der Ansprüche 1 bis 4 durchgeführt wird.

9. Computerprogrammprodukt, beinhaltend Anweisungen, wobei, wenn das Computerprogrammprodukt auf einem Computer ausgeführt wird, der Computer in die Lage versetzt wird, die Schritte des Verfahrens nach einem der Ansprüche 1 bis 4 durchzuführen.

## Revendications

1. Procédé de navigation, mis en œuvre par un second dispositif (203), dans lequel le procédé comprend :
la réception de secondes informations envoyées par une unité de bord de route (200), dans lequel les secondes informations sont des informations d'invite configurées pour inviter le second dispositif (203) à envoyer des premières informations à un premier dispositif (201) ;
l'envoi des premières informations au premier dispositif (201), dans lequel les premières informations comprennent des informations satellitaires ;
dans lequel chacun du premier dispositif et du second dispositif est un terminal de véhicule (203) ; et dans lequel les informations satellitaires comprennent au moins l'un d'une quantité de satellites trouvés (100), d'un angle de chaque satellite, d'une fréquence de chaque satellite, des informations sur l'heure de positionnement et des informations sur les éphémérides des satellites.

2. Procédé selon la revendication 1, dans lequel les premières informations comprennent en outre des informations de position de référence du premier dispositif (201).

3. Procédé selon la revendication 2, dans lequel les informations de position de référence du premier dispositif comprennent une pluralité de positions de référence et des identifiants de la pluralité de positions de référence.

4. Procédé selon la revendication 2 ou la revendication 3, dans lequel les informations de position de référence du premier dispositif comprennent au moins l'une d'une coordonnée de longitude, d'une coordonnée de latitude, d'une coordonnée d'altitude, d'une valeur d'observation de pseudo-distance et d'une valeur d'observation de phase porteuse.

5. Procédé de navigation selon l'une quelconque des revendications 1 à 4, dans lequel le procédé comprend en outre : lors de la détection, par l'unité de bord de route (200), du premier dispositif (201), l'envoi, par l'unité de bord de route, des secondes informations au second dispositif (203).

6. Procédé selon la revendication 5, dans lequel la détection d'un premier dispositif (201) comprend la détection du premier dispositif lorsqu'il quitte la sortie d'un garage, d'un tunnel ou sous un pont.

7. Combinaison d'un terminal de véhicule et d'une unité de bord de route, dans laquelle le terminal de véhicule est configuré pour réaliser les étapes du second terminal dans le procédé selon l'une quelconque des revendications 1 à 4, et le terminal de bord de route est configuré pour réaliser les étapes du terminal de bord de route dans le procédé selon l'une quelconque des revendications 5 et 6.

8. Support de stockage lisible par ordinateur, comprenant un programme, dans lequel lorsque le programme est exécuté par un processeur, le procédé selon l'une quelconque des revendications 1 à 4 est réalisé.

9. Produit de programme informatique comportant des instructions, dans lequel lorsque le produit de programme informatique fonctionne sur un ordinateur, l'ordinateur est activé pour réaliser les étapes du procédé selon l'une quelconque des revendications 1 à 4.
